# EUROPEAN PATENT APPLICATION

(11) **EP 4 838 340 A1**
(43) Date of publication of application: **11.11.2026**
(21) Application number: 25174908.1
(22) Date of filing: 07.05.2025
(51) Int. Cl.: G06F 3/041, G06F 3/044

(54) **APPARATUS AND METHOD FOR DETECTING THE EFFECT OF AN INTERFERER**

(71) Applicant: NXP B.V., 5656 AG Eindhoven (NL)
(72) Inventor: Guatama, Temujin, 5656AG Eindhoven (NL)
(74) Representative: Schwarzweller, Thomas

(57) **Abstract**

A method for detecting an effect of an interferer in a capacitive touch screen system, comprising a metal matrix including a plurality of rows and a plurality of columns is described. A plurality of input frames are generated and input to the system including a first and second multi-sine input frames. The second multi-sine input frame is a phase-rotated version of the first multi-sine input frame. A first and second processed frame is generated by converting the first and second system output frames to the frequency domain, at least one of a first converted frame and a second converted frame including a phase rotation having a phase rotation value applied during or after the frequency domain conversion. The effect of an interferer is determined in at least one of a plurality of frequency bins from at least one of the first processed frame and the second processed frame.

## Description

### FIELD

The present disclosure describes a method and apparatus for detecting the effect of a single tone interferer (STI) in a system.

### BACKGROUND

System identification applications with multi-sines are often used to estimate the frequency transfer function (FRF) of a system while characterising the noise and distortion components. This estimation is then used to improve the performance of the system.

### SUMMARY

Aspects of the disclosure are defined in the accompanying claims. In a first aspect, there is provided a method for detecting an effect of an interferer in a capacitive touch screen system, comprising an electrode matrix including a plurality of rows and a plurality of columns, the method comprising: generating a plurality of input frames comprising a first multi-sine input frame and a second multi-sine input frame, where the second multi-sine input frame is a phase-rotated version of the first multi-sine input frame; receiving the plurality of input frames by the system; generating by the system, a system output dependent on the plurality of multi-sine input frames, the system output comprising a first output frame dependent on the first multi-sine input frame and a second output frame dependent on the second multi-sine input frame; generating a first processed frame and a second processed frame by either (i) converting the first output frame and the second output frame to the frequency domain, at least one of a first converted frame and a second converted frame including a phase rotation having a phase rotation value; or (ii) converting the first output frame and the second output frame to the frequency domain, and applying a phase rotation having a phase rotation value to at least one of a first converted output frame and a second converted output frame; and determining the effect of an interferer in at least one of a plurality of frequency bins from at least one of the first processed frame and the second processed frame.

In some embodiments, the first multi-sine input frame and the second multi-sine input frame are sequential. In some embodiments, converting the first output frame and the second output frame to the frequency domain further comprises applying a Fourier transform to the first output frame and the second output frame. In some embodiments, determining the effect of an interferer in at least one of the plurality of frequency bins from at least one of the first processed output frame and the second processed output frame comprises determining an estimated magnitude of the effect of the interferer from the magnitude of the difference of the Fourier transform coefficients of the first processed frame and the second processed frame.

In some embodiments, generating a multi-sine input frame of the plurality of multi-sine input frames comprises generating a plurality of sine waves at a plurality of active frequencies, applying each of the plurality of sine waves to a respective row of the plurality of rows, wherein the system output is coupled to a column of the plurality of columns. In some embodiments, generating the first multi-sine input frame and the second multi-sine input frame further comprises using a first plurality of phase values for generating the first multi-sine input frame and using a second plurality of phase values for generating the second multi-sine input frame, where the difference between the first plurality of phase values and the second plurality of phase values is a phase offset value. In some embodiments, the phase rotation value is the negative of the phase offset value. In some embodiments, detecting the effect of an interferer further comprises comparing the estimated magnitude of the effect of the interferer with a threshold value. In some embodiments, the method comprises, in response to detecting the effect of the interferer, adapting the coefficient of at least one active frequency bin of the plurality of frequency bins of at least one of the first processed frame and the second processed frame by: comparing the magnitude of two frequency bins on either side of the at least one active frequency bin; determining a phase of the effect of the interferer from the comparison; and modifying the coefficient of the at least one active frequency bin based on the estimate of the magnitude and the phase of the effect of the interferer. In some embodiments, the method comprises adapting the output frequency of a driver circuit configured to be coupled to a row of the plurality of rows in response to determining the effect of the interferer.

In a second aspect, there is provided an apparatus comprising: a capacitive touch screen system, comprising an electrode matrix including a plurality of rows and a plurality of columns , the capacitive touch screen system having a system input and a system output; a multi-sine generator having a generator output coupled to the system input and configured to generate a plurality of input frames comprising a first multi-sine input frame and a second multi-sine input frame, where the second multi-sine input frame is a phase-rotated version of the first multi-sine input frame; wherein the system output is configured to output a plurality of output frames dependent on the plurality of multi-sine input frames, the system output comprising a first output frame dependent on the first multi-sine input frame and a second output frame dependent on the second multi-sine input frame; and either (i) a time-to-frequency domain converter having a converter input coupled to the system output and a converter output configured to output a first processed frame and a second processed frame by converting the first output frame and the second output frame to the frequency domain, at least one of a first converted output frame and a second converted output frame including a phase rotation having a phase rotation value in the frequency domain conversion; and a detector having a detector input coupled to the converter output; or (ii) a time-to-frequency domain converter having a converter input coupled to the system output and a converter output configured to output a first converted output frame and a second converted output frame, a phase rotator having a phase rotator input coupled to the converter output and a phase rotator output configured to output a first processed frame and a second processed frame ; and a detector having a detector input coupled to the phase rotator output; wherein the detector is configured to determine the effect of an interferer in at least one of a plurality of frequency bins from the first processed frame and the second processed frame.

In some embodiments, the first multi-sine input frame and the second multi-sine input frame are sequential. In some embodiments, the time-to-frequency domain converter is configured to apply a Fourier transform to the first output frame and the second output frame. In some embodiments, determining the effect of an interferer in at least one of the plurality of frequency bins from the first processed frame and the second processed frame comprises determining an estimated magnitude of the effect of the interferer from the magnitude of the difference of the Fourier transform coefficients of the first processed frame and the second processed frame. In some embodiments, generating the multi-sine input frame of the plurality of multi-sine input frames comprises generating a plurality of sine waves at a plurality of active frequencies.

In some embodiments, the multi-sine generator is further configured to generate the first multi-sine input frame and the second multi-sine input frame using a first plurality of phase values for generating the first multi-sine input frame and using a second plurality of phase values for generating the second multi-sine input frame, where the difference between the first plurality of phase values and the second plurality of phase values is a phase offset value. In some embodiments, the phase rotation value is the negative of the phase offset value. In some embodiments, detecting the effect of an interferer further comprises comparing the estimated magnitude of the effect of the interferer with a threshold value.

In some embodiments, the detector is configured to in response to detecting the effect of the interferer, adapt the coefficient of at least one active frequency bin of the plurality of frequency bins of at least one of the first processed frame, the second processed frame, the first converted output frame and the second converted output frame.

In some embodiments, the detector is further configured to adapt the coefficient of the at least one active frequency bin by: comparing the magnitude of two frequency bins on either side of the at least one active frequency bin; determining a phase of the effect of the interferer from the comparison; and modifying the coefficient based on the estimate of the magnitude and the phase of the effect of the interferer.

### BRIEF DESCRIPTION OF THE DRAWINGS

In the figures and description like reference numerals refer to like features. Embodiments are now described in detail, by way of example only, illustrated by the accompanying drawings in which:
Figure 1A shows an example apparatus.
Figure 1B is a plot showing the effect of a STI on the magnitude of the FFT coefficient. Figure 2A shows an apparatus according to an embodiment.
Figure 2B shows an example multi-sine signal.
Figure 3 illustrates a method of operation of the apparatus of figure 2A.
Figure 4A shows a graph of the scaling factor used in the apparatus of figure 2A.
Figure 4B shows a plot of the normalised magnitude varying versus the distance to a Fourier transform frequency bin.
Figure 5 shows a plot of the phase spectrum versus the frequency bin index and the corresponding amplitude variation.
Figure 6 shows a method of compensating for a single tone interferer according to an embodiment.
Figure 7 is a graph illustrating the performance of the method of figure 6.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION OF EMBODIMENTS

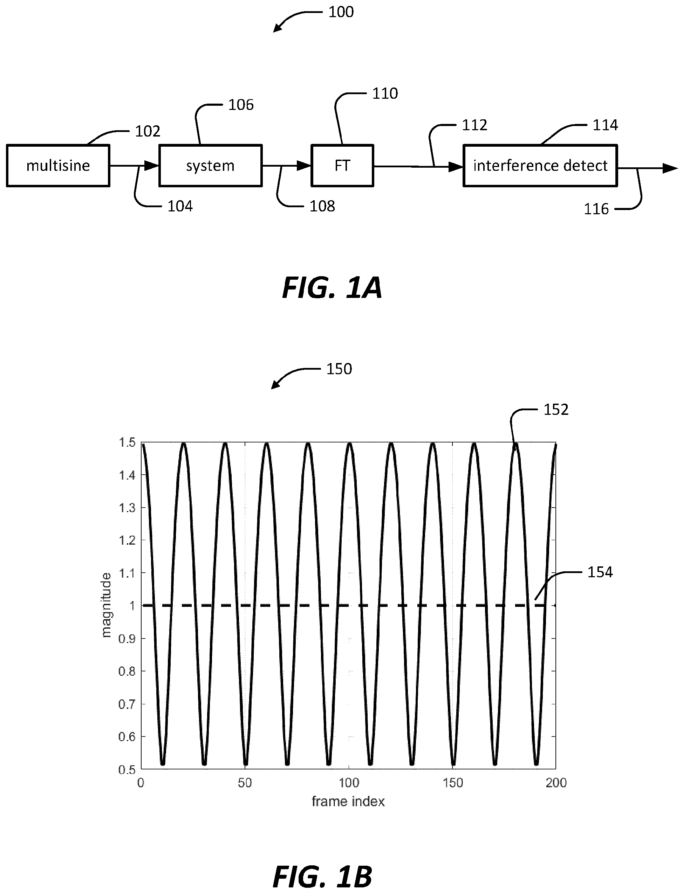

Figure 1A shows a known apparatus 100 for characterizing a system. A multi-sine generator 102 has an output connected to a system input 104 of a system 106 to be characterised. The system output 108 is connected to an input of a Fourier transform module 110. The Fourier transform module output 112 is connected to an input of an interference detector 114. The interference detector output 116 may be connected to further modules or circuitry (not shown).

In applications of system identification, the multi-sine methodology is well-known, as it allows to identify the best linear approximation of a system to be modelled, while providing the possibility to characterise the noise and some nonlinear distortion influences. A multi-sine is a periodic signal that consists of a sum of sine waves with harmonically related frequencies. The period of the signal is N, and is often taken equal to the length of the analysis window of a frequency transform (FT) such as a fast Fourier Transform (FFT) or discrete Fourier transform (DFT).
$x \left[n\right] = {\sum }_{i = 0}^{\frac{N}{2}} {a}_{i} cos \left(2π{f}_{i}\frac{n}{{f}_{s}}+{φ}_{M , i}\right) ,$ (1)
where aᵢ and φ_{M,i} are the amplitudes and phases of the iₜₕ sine wave. Given the sampling rate fₛ, the corresponding frequencies in Hz are:
${f}_{i} = i ⋅ \frac{{f}_{s}}{N}$ (2)

Each of the frequencies fᵢ corresponds to a bin in an N-points FFT or DFT (with the same index), and a subset can be selected to span the part of the frequency spectrum that is relevant for the analysis. The frequencies fᵢ can further be selected such that the N bins of a FT follow a certain pattern of active frequency bins (aᵢ≠0) and inactive frequency bins (aᵢ=0). The frequency response function (FRF) can be estimated on the active bins, and the noise interferences or the distortions can be characterised from the inactive bins.

In operation, the multi-sine generator 102 provides an excitation signal to the system 106. The output y[k] on the system output 108 is received by the frequency transform module 110 which determines the frequency transfer function at the active bins using an N-points Fast Fourier Transform (FFT) or DFT or other suitable frequency transform. If the system 106 is linear, only the active bins will contain signal power coming from the system 106. Additive broadband noise will be present on both the active and the inactive bins, allowing for a characterisation of the noise in the inactive bins. The inactive bins can be chosen such that possible harmonic distortions end up in specific inactive bins. This allows for the characterisation or detection of nonlinear components.

In an example application where the impedance needs to be estimated, x[k] can be applied to the current and y[k] can be the measured voltage response for example for monitoring the state of battery cells. Another example application is a touch panel, where each row transmits a signal, and each column receives a signal that contains all row frequencies due to the capacitive or other coupling between row and column. Information regarding the panel can be obtained from changes in the current measurement or in the electrical impedance i.e. ratio between voltage and current. In this application, the sine waves of the multi-sine are sent separately (at least one for each row), and the columns receive the summation, yielding the full multi-sine. In this context, the terms row and column may be considered interchangeable, so for example the signals may be transmitted separately for each column and the rows receive the summation.

The multi-sine analysis approach can be used to detect and characterise interferences that are captured at the inactive bins. A single-tone interference (STI), however, may interfere with the estimation of the FRF (and of the best linear approximation) in the active bins. Consider a unit-amplitude sine wave at frequency bin i (an active bin) and a single-tone interference at frequency (i+0.13) fs/N (fractional bin i+0.13) with an amplitude of 0.5. In each N-samples frame, an FFT is performed and the magnitude of the complex-valued coefficient of the iₜₕ bin is plotted as shown in the graph 150 of Figure 1B. In the absence of the STI, the magnitude has a constant value of 1 shown by dashed line 154, but the STI causes the magnitude to vary around this value. This variation depends on the distance from the STI frequency to bin i and on the amplitude of the STI. If a multi-sine analysis is performed using a multi-sine that has bin i as an active bin, the resulting FRF will vary in bin i in the presence of the STI, adding uncertainty and inaccuracy to the FRF estimate. An STI can be detected in the inactive bins of the multi-sine , but it is not possible or straightforward to estimate the effect on the FFT coefficient at active bin i.

There exist methods for reducing the effect of single-tone interferences in a signal. These methods estimate the frequency and amplitude of the STI, and either use a filter to reduce the magnitude of the STI, or use an approach to determine its phase to synchronize the estimate to the STI in order to subtract it from the signal.

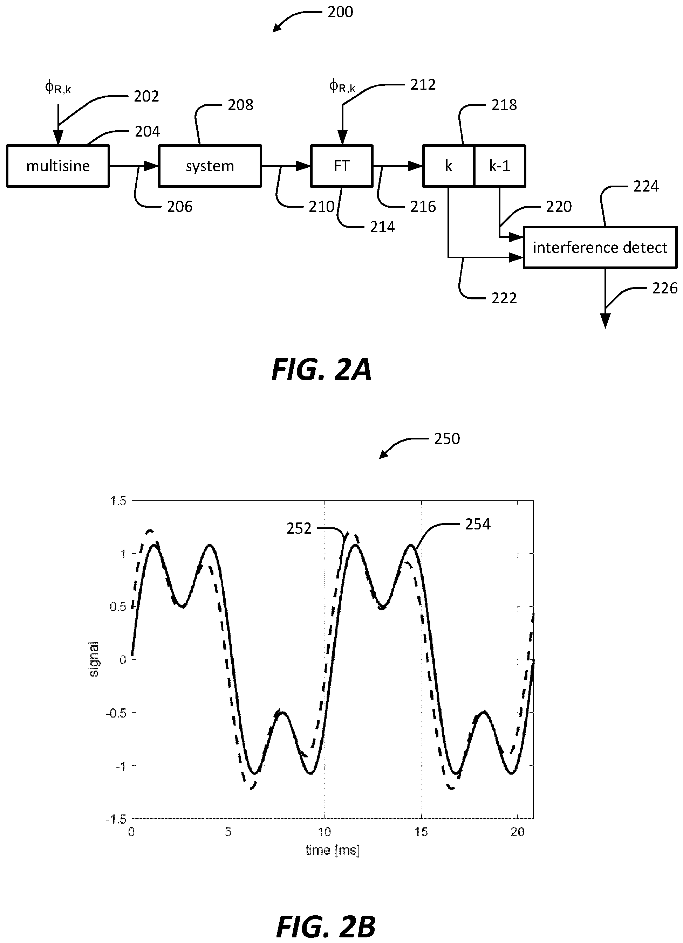

Figure 2A shows an apparatus 200 for characterising a capacitive touch screen system according to an embodiment. A multi-sine generator 204 has an output connected to a system input 206 of a system 208 to be characterised. The multi-sine generator has a control input 202. The system output 210 is connected to a first input of a frequency transform module 214. The frequency transform module has a control input 212. The frequency transform module output 216 is connected to an input of a frame buffer 218. A first frame buffer output 220 is connected to a first input of an interference detector 224. A second frame buffer output 222 is connected to a second input of an interference detector 224. The interference detector output 226 may be connected to further modules or circuitry (not shown). The apparatus 200 may be implemented in hardware or a combination of hardware and software.

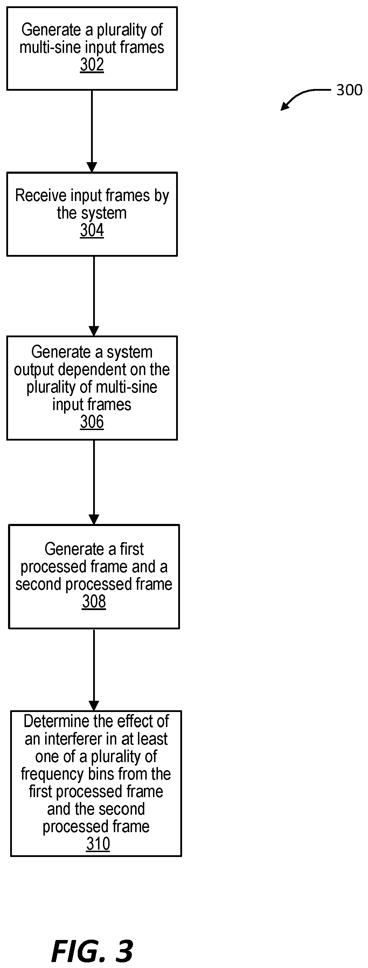

Figure 3 describes a method 300 of operation of the apparatus 200. In step 302, a plurality of multi-sine input frames are generated by the multi-sine generator 204. Multi-sine input frames are frames of digital data that include the multi-sine waveform or waveforms. The input frames include at least one input frame which is a phase -rotated version of the multi-sine input compared with a subsequent input frame. The phase-rotated version may be obtained by adding a phase offset φ*_{R}* to each of the phases of each of the sine waves of the multi-sine which can be different for each active frequency bin. Figure 2B shows an example plot 250 for signals at 48kHz and a frame size of 1000 samples. The solid curve 254 shows a first multi-sine consisting of two sine waves (at 96Hz and 288Hz) with zero-phases. The dashed curve 252 shows a second multi-sine consisting of the same frequencies, but with an additional phase shift of 0.3 radians. In some examples, the phase rotation may be zero in which case no control input 202 is required. In step 304, the input frames are received by the system 208. In step 306, the system 208 output is generated in response to the input multi-sine input frames. The response includes an output frame generated in response to respective multi-sine input frames. For example the response includes a first output frame which corresponds to a first multi-sine input frame and a second output frame corresponding to a second multi-sine input frame which is a phase rotated version of the first multi-sine input frame. In step 308, a first processed frame and a second processed frame may be generated from the first output frame and the second output frame. In apparatus 200, the FT module 214 applies an inverse phase rotation i.e. rotating the phase by -φ*_{R}* to one of the first output frame and the second output frame such that the phase of the first output frame and the second output frame are aligned. The FT module 214 may then output the first processed frame and the second processed frame. In other examples, the FT module 214 may convert the system output to the frequency domain only without applying a phase rotation. In this example, the phase rotation may be done in a separate module (not shown) between the FT module and the frame buffer 218. The processed frames are buffered in the frame buffer 218. In step 310, the effect of a single tone interferer, i.e., the modification of the complex-valued coefficient of at least one of the active frequency bins may be determined from the first processed frame and the second processed frame by the interference detector 224. An analysis module (not shown) may account for the detection result by flagging that a particular frequency bin i is invalid or unreliable.

The apparatus and method may detect and reduce the effect of a single-tone interference in the complex-valued coefficient that results from an FT analysis by adding the phase offset (phase rotation) to a first multi-sine input frame with respect to a second multi-sine input frame and removing the phase offset after the output of the system either during or after the frequency transform module operation. The method does not estimate the actual frequency of the interference: only the effect the STI has on the complex-valued FT coefficient is estimated. The apparatus and method are not restricted to detect and reduce the effect of single-tone interferences, but can be applied to interferences in general. The description has been limited to the case where the interferer is a single-tone interference. In an example system of a touch panel including an electrode matrix having, where each row of the matrix transmits a sine wave at a certain frequency (one of the active frequencies of the multi-sine), and each column receives a signal that contains all row frequencies. The presence of an interference near an active frequency may render the measurement of a row unreliable. This can be taken into account in further processing of the touch signals, or the frequency for that row may be changed by a frequency hopping mechanism.

Consider the (true) frequency response function (FRF) of the plant for bin i to be: $FRF = T {e}^{{jφ}_{P}}$ (3) The transfer function scales the magnitude of the complex-valued FT coefficient of the input by T and rotates it by φ*_{P}*. The reference to the bin index i is not shown for the sake of convenience. If the (unknown) effect of the STI on bin *i* is represented as A 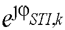 (with*A*≥0), the complex-valued FT coefficient at the output for bin *i* in frame *k* is: ${C}_{k} = T {e}^{j \left({φ}_{P}+{φ}_{M}+{φ}_{R , k}\right)} + A {e}^{{jφ}_{STI , k}} ,$ (4) where φ*_{M}* is the original phase of the multi-sine, φ_{*R*,*k*} is the phase that has been added by the system 208. The complex-valued coefficient is rotated back by -φ_{*R*,*k*} , yielding for frames *k* and *k-*1: $\begin{matrix}{C}_{k}^{′} = {Te}^{j \left({φ}_{P}+{φ}_{M}\right)} + {Ae}^{j \left({φ}_{STI , k}-{φ}_{R , k}\right)} \\ {C}_{k - 1}^{′} = {Te}^{j \left({φ}_{P}+{φ}_{M}\right)} + {Ae}^{j \left({φ}_{STI , k - 1}-{φ}_{R , k - 1}\right)}\end{matrix}$ (5) The subtraction of the complex-valued FT coefficients of two consecutive frames yields a result where the multi-sine contribution is removed and the magnitude can be written as: $\left|ΔC{′}_{k}\right| = A ⋅ γ$ (6) The magnitude of the effect of the STI on bin *i* corresponds to the true magnitude *A* which represents the magnitude if only the STI were present without any multi-sine components multiplied by a factor γ.

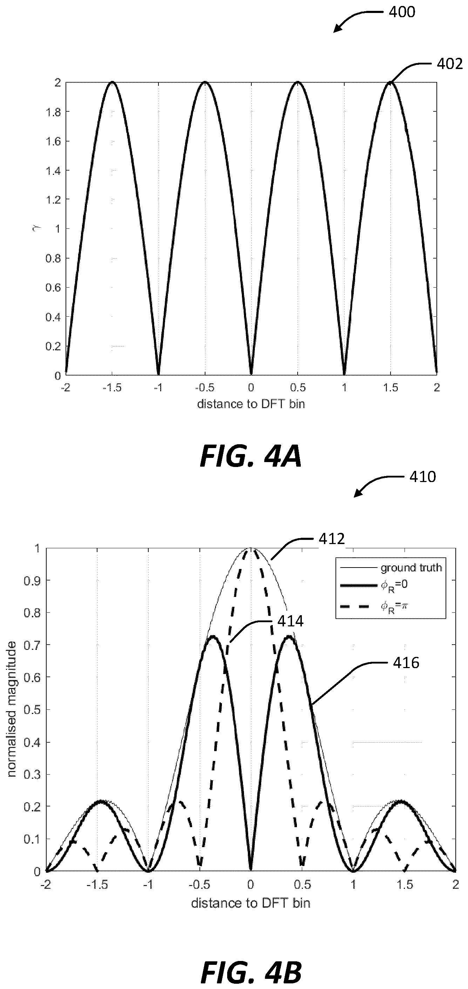

Figure 4A shows a graph 400 of scaling factor γ on the y-axis varying between 0 and 2 and the distance to the DFT bin from -2 to +2 on the x-axis for Δφ_{*R*,*k*}=0 for all values of *k* (so with no additional phase offset), in which case the method simplifies to a subtraction of consecutive frames. It can be observed that the scaling factor line 402 varies between 0 and 2 as a function of the distance between the STI frequency and bin i. The scaling factor is zero when the distance is zero or an integer number of bins, corresponding to the case where an STI frequency coincides with bin i or an integer bin value. When the STI coincides with an FT bin, which may be an active bin or an inactive bin, its magnitude cannot be determined since *γ* = 0, because the STI is synchronised with the frame and consequently has a stable phase across frames. The distances for which γ is zero are referred to herein as blind spots.

Since |ΔC'*ₖ*| is related to the ground truth magnitude *A*, an estimate of A can be obtained:
${Â}_{k} = \frac{1}{2} \left|ΔC{′}_{k}\right|$ (7)

When γ reaches its maximal value of 2, the estimate is equal to the ground truth value. Figure 4B shows a plot 410 of the normalised magnitude A on the y-axis varying between 0 and 1 versus the distance to the DFT bin on the x-axis varying between -2 and +2. The effect of an STI on bin i is shown by line 412. In this case which uses rectangular windowing, the effect follows a sinc function. In other examples different windowing functions may be used, such as a raised-cosine window or a Blackman window. The magnitude estimate using φ*_{R}*=0 is represented by the curve 416, showing the same blind spots as Figure 4A. Only the blind spot within the main lobe between -1 and 1 on the x-axis is problematic: the estimate is zero, but the ground truth is 1. At the other blind spots for integer distances, the estimate is zero, but so is the ground truth value.

The blind spot in the main lobe can be shifted to a different position by changing φ*_{R,k}* . For a phase offset of φ_{*R*,*k*}=π for all even or odd values of *k (i.e.,* every other frame), the resulting estimate is shown as the thick dashed curve 414 This curve has blind spots at ±0.5 in the main lobe, and the blind spots at the integer bins remain. Again, these are not problematic, since the ground truth value is also zero at those points.

A combination of the curves 414, 416 for φ*_{R,k}*=0 and φ_{*R*,*k*}=π (every other frame) can yield a better estimate of the magnitude A, *e.g.,* by taking the maximal value of the two estimates. Alternatively, in some examples a regression analysis can be performed to find the optimal linear combination of the two estimates to minimise the deviation with respect to the ground truth curve. Furthermore, using more different values for φ_{*R*,*k*} will yield more accurate estimates.

In operation, the phase offset φ_{*R*,*k*} can be changed at the start of each frame *k, e.g.,* by iterating over a list of *L* possible values. This way, for each frame, an estimate with different blind spots can be computed and stored in a buffer that retains the L most recent estimates. The values in this buffer can be combined to yield the combined estimate of the magnitude for frame *k,* Â*_{C,k}* . The combined estimate Â*_{C,k}* can now be used as a criterion to detect the presence of an STI causing interference on bin i. This can be done by comparing the combine estimate value Â*_{C,k}* to a fixed threshold. In some examples, this threshold can be chosen as a function of the expected noise level on bin i. Alternatively, statistics for the combined estimate Â*_{C,k}* can be tracked during operation, based on which a detection mechanism can be designed. Example statistics are (running) minimum, (running) average and standard deviation.

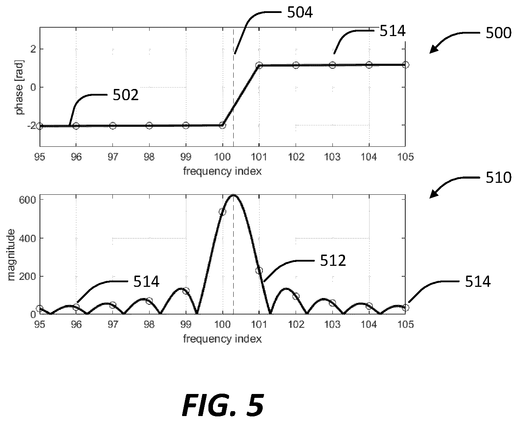

A method is now described to reduce the influence of the STI on bin i. It can be activated for example when an STI has been detected for example by interference detector 224. Figure 5 shows the phase spectrum 500 of an STI at fractional bin 100.3 showing phase in radians ranging between -2 and +2 versus the frequency bin index ranging between 95 and 105. It can be observed that the phase line 502 has an almost constant value to the left (-2.0 rad) and to the right (1.1 rad) of the actual STI frequency of bin 100.3, shown by dashed vertical line 504. The phase transitions at the STI frequency. The corresponding amplitude spectrum 512 is shown in graph 510. The markers 514 correspond to the values on the FT grid. In this case, the desired phase for bin 100 is equal to the left phase value bin 99. This is the case when the STI frequency is to the right of bin i, in which case the left bin magnitude is smaller than the right bin magnitude. Bin 100 itself cannot be used for estimating the phase, since in operation, the multi-sine signal will be present there. At bins 99 and 101, however, there should be no signal power, only noise and/or STI influences, given that these bins should not have a corresponding multi-sine signal excitation i.e., they should be inactive bins of the multi-sine.

To derive the STI phase in bin *i,* it is necessary to measure the bins (*i*±1). If the STI is within ±1 bin, the STI phase at bin i is approximately equal to the phase value in the left or right bin. To decide which of the two, the bin with the smaller magnitude should be taken (because this indicates that the actual STI frequency is on the other side of bin i). To determine whether the STI is within ±1 bin, the difference between the phases in bins *i*±1 should be observed: the difference is (approximately) π if the STI is within the one-bin range, and it is (much) smaller otherwise.

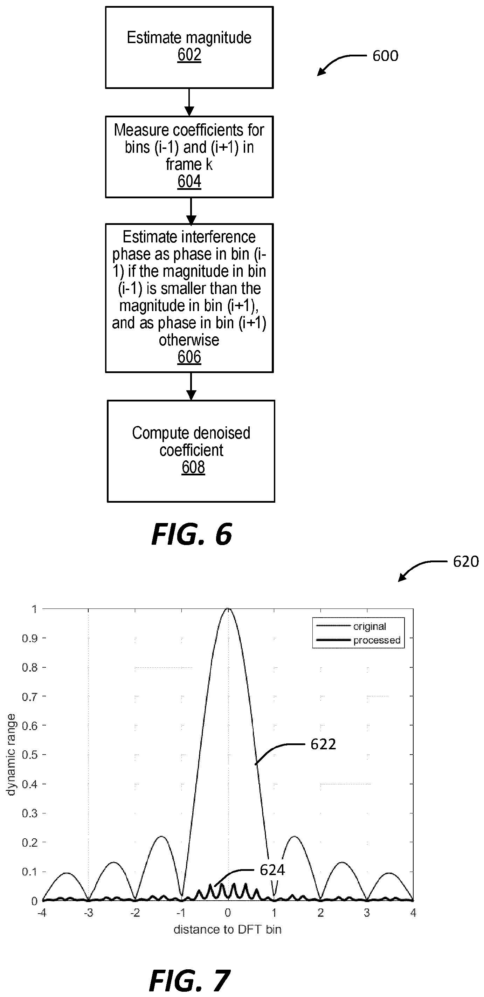

Figure 6 shows a method 600 to estimate the complex-valued coefficient that corresponds to the STI effect on FT bin *i.* In step 602, the magnitude Â*_{C,k}* is estimated. In step 604 , the coefficients for bins (i-1) and (*i*+1) in frame *k* are measured. In step 606, the the STI phase φ*_{J}* is estimated as the phase in bin (i-1) if the magnitude in bin (i-1) is smaller than the magnitude in bin (i+1), and as the phase in bin (i+1) otherwise. In step 608, the denoised coefficient for bin *i* is computed as *C̃ₖ = Cₖ - Â_{C,k}e^{jφ^{J}}.*

Figure 7 shows the performance of the STI reduction method 620. The Y-axis shows the dynamical range of the magnitude in FT bin i=50, measured as the difference between maximum and minimum value, allowing 10 frames for convergence of the estimator. This has been measured for STIs at a certain distance from bin i=50 (X-axis). The peak-normalised dynamic range of the original data is shown as the thin curve 622 and ranges from 0 to 1. After subtracting the estimated STI influence using the proposed method, the maximal processed dynamic range 624 is reduced to 0.06.

Embodiments estimate the effect of an interference on the DFT measurement without estimating the amplitude and frequency of the interference itself. This allows the detection of an affected DFT frequency bin and selectively reducing the effect in that bin rather than trying to reduce the complete interference. Embodiments may detect the effect of an interference when a frequency of the interference coincides with a frequency where the multi-sine excitation signal is also present. Embodiments of the apparatus may include a touch screen which may improve the robustness to tonal or other interferences. In other embodiments the apparatus may include a battery and improve the electrochemical impedance spectroscopy under driving conditions which may be used to improve robustness of the battery state monitoring.

A method for detecting an effect of an interferer in a capacitive touch screen system, comprising an electrode matrix including a plurality of rows and a plurality of columns is described. A plurality of input frames are generated and input to the system including a first and second multi-sine input frames. The second multi-sine input frame is a phase-rotated version of the first multi-sine input frame. A first and second processed frame is generated by converting the first and second system output frames to the frequency domain, at least one of a first converted frame and a second converted frame including a phase rotation having a phase rotation value applied during or after the frequency domain conversion. The effect of an interferer is determined in at least one of a plurality of frequency bins from at least one of the first processed frame and the second processed frame.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method for detecting an effect of an interferer in a capacitive touch screen system, comprising an electrode matrix including a plurality of rows and a plurality of columns, the method comprising:
generating a plurality of input frames comprising a first multi-sine input frame and a second multi-sine input frame, where the second multi-sine input frame is a phase-rotated version of the first multi-sine input frame;
receiving the plurality of input frames by the system;
generating by the system, a system output dependent on the plurality of multi-sine input frames, the system output comprising a first output frame dependent on the first multi-sine input frame and a second output frame dependent on the second multi-sine input frame;
generating a first processed frame and a second processed frame by either
(i) converting the first output frame and the second output frame to the frequency domain, at least one of a first converted frame and a second converted frame including a phase rotation having a phase rotation value; or
(ii) converting the first output frame and the second output frame to the frequency domain, and applying a phase rotation having a phase rotation value to at least one of a first converted output frame and a second converted output frame;
and determining the effect of an interferer in at least one of a plurality of frequency bins from at least one of the first processed frame and the second processed frame.

2. The method of claim 1 wherein the first multi-sine input frame and the second multi-sine input frame are sequential.

3. The method of any preceding claim wherein converting the first output frame and the second output frame to the frequency domain further comprises applying a Fourier transform to the first output frame and the second output frame.

4. The method of claim 3, wherein determining the effect of an interferer in at least one of the plurality of frequency bins from at least one of the first processed frame and the second processed frame comprises determining an estimated magnitude of the effect of the interferer from the magnitude of a difference of the Fourier transform coefficients of the first processed frame and the second processed frame.

5. The method of any preceding claim, wherein generating a multi-sine input frame of the plurality of multi-sine input frames comprises generating a plurality of sine waves at a plurality of active frequencies, applying each of the plurality of sine waves to a respective row of the plurality of rows, wherein the system output is coupled to a column of the plurality of columns.

6. The method of any preceding claim, wherein generating the first multi-sine input frame and the second multi-sine input frame further comprises using a first plurality of phase values for generating the first multi-sine input frame and using a second plurality of phase values for generating the second multi-sine input frame, where a difference between the first plurality of phase values and the second plurality of phase values is a phase offset value.

7. The method of claim 6, wherein the phase rotation value is a negative of the phase offset value.

8. The method of any of claims 4 to 7, wherein detecting the effect of an interferer further comprises comparing the estimated magnitude of the effect of the interferer with a threshold value.

9. The method of claim 8 further comprising, in response to detecting the effect of the interferer, adapting the coefficient of at least one active frequency bin of the plurality of frequency bins of at least one of the first processed frame and the second processed frame by:
comparing the magnitude of two frequency bins on either side of the at least one active frequency bin;
determining a phase of the effect of the interferer from the comparison; and
modifying the coefficient of the at least one active frequency bin based on the estimate of the magnitude and the phase of the effect of the interferer.

10. The method of any preceding claim further comprising adapting the output frequency of a driver circuit configured to be coupled to a row of the plurality of rows in response to determining the effect of the interferer.

11. An apparatus comprising:
a capacitive touch screen system, comprising an electrode matrix including a plurality of rows and a plurality of columns , the capacitive touch screen system having a system input and a system output;
a multi-sine generator having a generator output coupled to the system input and configured to generate a plurality of input frames comprising a first multi-sine input frame and a second multi-sine input frame, where the second multi-sine input frame is a phase-rotated version of the first multi-sine input frame;
wherein the system output is configured to output a plurality of output frames dependent on the plurality of multi-sine input frames, the system output comprising a first output frame dependent on the first multi-sine input frame and a second output frame dependent on the second multi-sine input frame;
and either (i) a time-to-frequency domain converter having a converter input coupled to the system output and a converter output configured to output a first processed frame and a second processed frame by converting the first output frame and the second output frame to the frequency domain, at least one of a first converted output frame and a second converted output frame including a phase rotation having a phase rotation value in the frequency domain conversion; and a detector having a detector input coupled to the converter output;
or (ii) a time-to-frequency domain converter having a converter input coupled to the system output and a converter output configured to output a first converted output frame and a second converted output frame, a phase rotator having a phase rotator input coupled to the converter output and a phase rotator output configured to output a first processed frame and a second processed frame ; and a detector having a detector input coupled to the phase rotator output; and
wherein the detector is configured to determine the effect of an interferer in at least one of a plurality of frequency bins from the first processed frame and the second processed frame.

12. The apparatus of claim 11, wherein the first multi-sine input frame and the second multi-sine input frame are sequential.

13. The apparatus of claim 11 or 12, wherein the time-to-frequency domain converter is configured to apply a Fourier transform to the first output frame and the second output frame.

14. The apparatus of claims 11 to 13, wherein determining the effect of an interferer in at least one of the plurality of frequency bins from the first processed frame and the second processed frame comprises determining an estimated magnitude of the effect of the interferer from the magnitude of a difference of the Fourier transform coefficients of the first processed frame and the second processed frame.

15. The apparatus of any of claims 11 to 14, wherein generating the multi-sine input frame of the plurality of multi-sine input frames comprises generating a plurality of sine waves at a plurality of active frequencies.
